# EUROPÄISCHE PATENTSCHRIFT

(11) **EP 0 850 435 B1**
(45) Veröffentlichungstag und Bekanntmachung des Hinweises auf die Patenterteilung: **14.11.2001**
(21) Anmeldenummer: 96934375.5
(22) Anmeldetag: 24.08.1996
(51) Int. Cl.: G02B 26/10, H04M 1/06, G02B 27/28

(54) **LICHTSTRAHL-ABLENKVORRICHTUNG**
LIGHT BEAM DEFLECTOR
DEFLECTEUR DE RAYON LUMINEUX

(30) Priorität: 07.09.1995 DE 19532971
(43) Veröffentlichungstag der Anmeldung: 01.07.1998
(73) Patentinhaber: Heidelberger Druckmaschinen Aktiengesellschaft, 69115 Heidelberg (DE)
(72) Erfinder: ZELENKA, Thomas, D-24248 Mönkeberg (DE)
(86) Internationale Anmeldenummer: DE9601575
(87) Internationale Veröffentlichungsnummer: WO9709651

(56) Entgegenhaltungen:
- EP-A- 0 126 469
- EP-A- 0 483 827
- DE-A- 4 128 468
- US-A- 1 800 031

## Beschreibung

Die Erfindung bezieht sich auf das Gebiet der Reproduktionstechnik und betrifft eine Vorrichtung zur Ablenkung eines Lichtstrahles.

Eine Lichtstrahl-Ablenkvorrichtung kann beispielsweise in einer Abtasteinrichtung für Vorlagen-Abtastgeräte oder für Aufzeichnungsgeräte Anwendung finden.

Bei einem Vorlagen-Abtastgerät, auch Eingabe-Scanner genannt, überstreicht der in einer Abtasteinrichtung erzeugte Lichtstrahl punkt- und zeilenweise die abzutastende Vorlage, und das von der Vorlage reflektierte oder durchgelassene Abtastlicht wird in einem optoelektronischen Wandler in ein Bildsignal umgewandelt.

Bei einem Aufzeichnungsgerät, auch Recorder, Belichter oder Ausgabe-Scanner genannt, wird der in einer Abtasteinrichtung erzeugte Lichtstrahl durch ein Bildsignal intensitätsmoduliert und der intensitätsmodulierte Lichtstrahl punkt- und zeilenweise über ein lichtempfindliches Aufzeichnungsmaterial geführt.

In einem Abtast- oder Aufzeichnungsgerät vom Flachbett-Typ ist die Halterung für die Vorlage bzw. das Aufzeichnungsmaterial eine ebene, relativ zur Abtasteinrichtung bewegte Fläche, die der Lichtstrahl punkt- und zeilenweise überstreicht.

In einem Abtast- oder Aufzeichnungsgerät vom Innentrommel-Typ ist die Halterung für die Vorlage bzw. das Aufzeichnungsmaterial als stationäre, zylindersegmentförmige Mulde ausgebildet. Die Abtasteinrichtung bewegt sich parallel zur Längsachse der Mulde, und der Lichtstrahl wird punkt- und zeilenweise senkrecht zur Längsachse radial über die Mulde geführt.

Eine Einstrahl-Ablenkvorrichtung für die Abtasteinrichtung in einem Aufzeichnungsgerät vom Innentrommel-Typ ist beispielsweise aus der EP-B-0 126 469 bekannt. Die bekannte Einstrahl-Ablenkvorrichtung weist einen Drehspiegel auf, der den Lichtstrahl zeilenweise über das Aufzeichnungsmaterial ablenkt, wobei der an dem Drehspiegel reflektierte Lichtstrahl nahezu die volle Lichtleistung des auf den Drehspiegel auftreffenden Lichtstrahles hat.

Pro Umdrehung des Drehspiegels wird jeweils nur eine Zeile auf dem Aufzeichnungsmaterial belichtet, und der Lichtstrahl benötigt bis zum Anfang der nächsten Zeile eine relativ lange Rückführungszeit. Die bekannte Einstrahl-Ablenkvorrichtung hat den Nachteil, daß sie aufgrund der langen Rückführungszeit einen relativ geringen Nutzungsgrad pro Umdrehung aufweist und somit nur eine relativ geringe Aufzeichnungsgeschwindigkeit erreicht werden kann.

Eine Zweistrahl-Ablenkvorrichtung für die Abtasteinrichtung in einem Aufzeichnungsgerät vom Innentrommel-Typ ist aus der DE-A-41 28 468 bekannt. Bei dieser Zweistrahl-Ablenkvorrichtung werden mittels einer Strahlteiler-Vorrichtung aus einem polarisierten Eingangs-Lichtstrahl zwei um 180° versetzte Teilstrahlen gewonnen. Die Strahlteiler-Vorrichtung weist im wesentlichen eine stationäre Lichtquelle zur Erzeugung des polarisierten Eingangs-Lichtstrahles und eine Ablenkeinheit auf, die sich um die optische Achse des Lichtstrahles dreht. Die Ablenkeinheit besteht aus einem Polarisations-Strahlteiler, einem Polarisations-Umsetzer und einem Reflektor, die auf der optischen Achse hintereinander angeordnet sind. Der von der stationären Lichtquelle kommende, polarisierte Lichtstrahl wird von einem Bildsignal intensitätsmoduliert und durch den Polarisations-Strahlteiler in der rotierenden Ablenkeinheit in zwei Teilstrahlen zerlegt. Die beiden Teilstrahlen treten radial um 180° versetzt aus der Ablenkeinheit aus, werden auf ein in einer Belichtungsmulde fixiertes Aufzeichnungsmaterial fokussiert und belichten punkt- und zeilenweise das Aufzeichnungsmaterial.

Mit den beiden Teilstrahlen werden pro Umdrehung der Ablenkeinheit zwei Zeilen auf dem Aufzeichnungsmaterial belichtet, wodurch ein hoher Nutzungsgrad und somit eine hohe Aufzeichnungsgeschwindigkeit erzielt werden kann. Die bekannte Zweistrahl-Ablenkvorrichtung hat aber den Nachteil, daß jeder Teilstrahl nur etwa 50% der Licht-leistung des Eingangs-Lichtstrahles aufweist, wodurch ein relativ geringer optischer Wirkungsgrad erreicht wird.

Zur Belichtung bestimmter Aufzeichnungsmaterialien werden in der Praxis Belichter mit Lichtstrahl-Ablenkvorrichtungen benötigt, welche die Aufzeichnungsmaterialien mit einer möglichst hohen Lichtleistung bei gleichzeitigem guten Nutzungsgrad belichten können. Die bekannte Zweistrahl-Ablenkvorrichtungen erfüllt diese Forderungen nicht in zufriedenstellender Weise.

Eine weitere Zweistrahl-Ablenkvorrichtung für die Abtasteinrichtung in einem Aufzeichnungsgerät vom Innentrommel-Typ ist aus der EP-A-0 483 827 bekannt. Bei dieser Zweistrahl-Ablenkvorrichtung werden zunächst zwei zirkularpolarisierte Eingangs-Lichtstrahlen mit unterschiedlichen Richtungen der Zirkularpolarisation erzeugt. Die zirkularpolarisierten Eingangs-Lichtstrahlen werden dann selektiv intensitätsmoduliert und zu einem kombinierten Eingangs-Lichtstrahl zusammengefaßt. Der kombinierte Eingangs-Lichtstrahl wird einer rotierenden Ablenkeinheit zugeführt, in der er in zwei linear polarisierte Teilstrahlen aufgespalten wird. Die beiden Teilstrahlen werden durch die rotierende Ablenkeinheit nahezu in gleicher Richtung auf ein in einer Belichtungsmulde fixiertes Aufzeichnungsmaterial gelenkt und belichten punkt- und zeilenweise das Aufzeichnungsmaterial.

Aufgabe der vorliegenden Erfindung ist es, eine Vorrichtung zur Ablenkung eines Lichtstrahles derart zu verbessern, daß ein größerer optischer Wirkungsgrad und gleichzeitig ein guter Nutzungsgrad erreicht werden.

Diese Aufgabe wird erfindungsgemäß durch die im Anspruch 1 angegebenen Merkmale gelöst.

Vorteilhafte Ausgestaltungen und Weiterbildungen sind in den Unteransprüchen angegeben.

Die Erfindung wird im folgenden anhand der Fig. 1 bis 3 näher erläutert.

Es zeigen:
- Fig. 1: ein Ausführungsbeispiel für eine Lichtstrahl-Ablenkvorrichtung mit dem Lichtweg eines ersten Ausgangs-Lichtstrahles,
- Fig. 2: die Lichtstrahl-Ablenkvorrichtung mit dem Lichtweg eines zweiten Ausgangs-Lichtstrahles und
- Fig. 3: ein Anwendungsbeispiel für die Lichtstrahl-Ablenkvorrichtung.

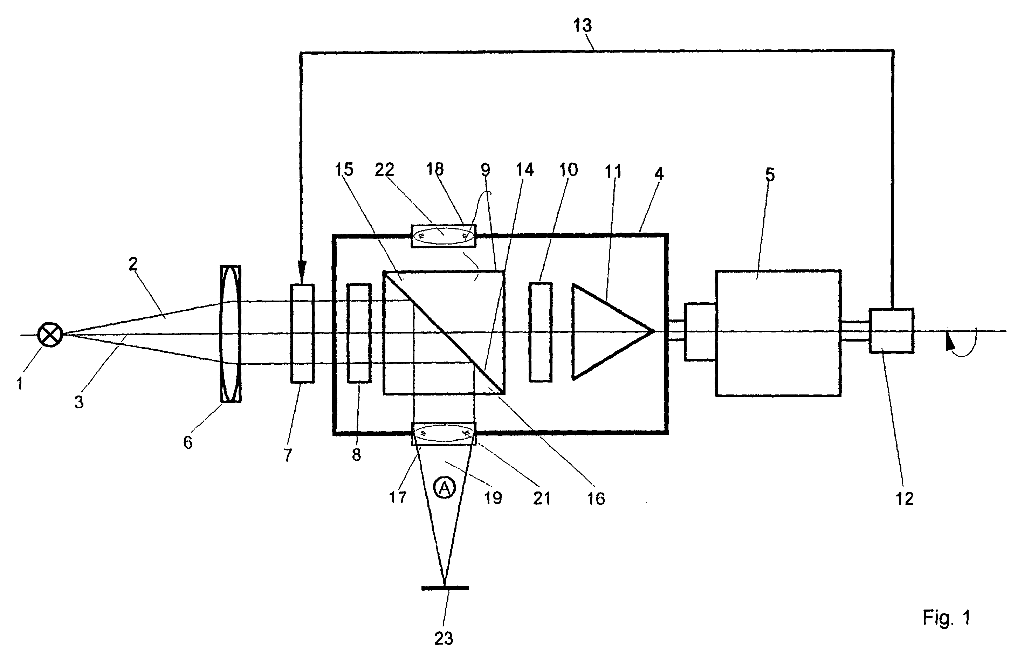

Fig. 1 zeigt ein Ausführungsbeispiel für eine Lichtstrahl-Abienkvorrichtung mit verbessertem optischen Wirkungsgrad und hohem Nutzungsgrad. Die Lichtstrahl-Ablenkvorrichtung besteht im wesentlichen aus einer stationären Lichtquelle (1) zur Erzeugung eines polarisierten Lichtstrahles (2) entlang einer optischen Achse (3) und aus einer Ablenkeinheit (4), die um die optische Achse (3) drehbar gelagert ist und von einem Motor (5) angetrieben wird.

Die stationäre Lichtquelle (1) ist beispielsweise eine Halbleiter-Laserdiode. Grundsätzlich kann auch jede andere Lichtquelle, die einen nicht polarisierten Lichtstrahl erzeugt, in Verbindung mit einem Polarisator verwendet werden, um den polarisierten Lichtstrahl (2) zu gewinnen.

Zwischen der Lichtquelle (1) und der Ablenkeinheit (4) sind auf der optischen Achse (3) hintereinander ein Linsensystem (6) und ein steuerbarer erster Polarisations-Umsetzer (7) stationär angeordnet.

Der steuerbare erste Polarisations-Umsetzer (7) ist beispielsweise ein elektrooptischer Modulator, der die Polarisation des einfallenden Lichtstrahles (2) in eine Zirkularpolarisation umwandelt und die Drehrichtung der Zirkularpolarisation in Abhängigkeit von dem jeweiligen Signalpegel eines Steuersignals umschaltet.

Die Ablenkeinheit (4) besteht prinzipiell aus einem zweiten Polarisations-Umsetzer (8), einem Polarisations-Strahlteiler (9), einem dritten Polarisations-Umsetzer (10) und einem Reflektor (11). Die optischen Elemente sind auf der optischen Achse (3) hintereinander angeordnet und in vorteilhafter Weise zu einer kompakten Einheit, beispielsweise durch Klebung, verbunden.

Mit dem Motor (5) ist ein programmierbarer Drehimpulsgeber (12) mechanisch gekoppelt, der um die optische Achse (3) rotiert und das zweipeglige Steuersignal erzeugt und über eine Leitung (13) an den ersten Polarisations-Umsetzer (7) liefert.

Der zweite Polarisations-Umsetzer (8) ist als Wellenplatte, beispielsweise als eine λ/4-Platte ausgebildet. Der zweite Polarisations-Umsetzer (8) setzt die Zirkularpolarisation des Lichtstrahles (2) in Abhängigkeit von der jeweiligen Drehrichtung der Zirkularpolarisation in eine Linearpolarisation mit einem ersten Polarisationszustand, beispielsweise in eine Linearpolarisation mit einer 0°-Polarisationsebene, oder mit einem zweiten Polarisationszustand um, beispielsweise in eine Linearpolarisation mit einer 90°-Polarisationsebene.

Der Polarisations-Strahlteiler (9) hat eine Polarisationsschicht (14), von welcher der linear polarisierte Lichtstrahl (2), abhängig von seinem jeweiligen Polarisationszustand, reflektiert oder durchgelassen wird. Die Polarisationsschicht (14) wird in der Regel aus mehreren dielektrischen Schichten mit unterschiedlichen Brechungsindizes gebildet. Alternativ kann die Polarisationsschicht (14) aus einer polarisierenden Folie aus Kunststoff oder einem anderen geeigneten Material bestehen. Der Träger für die Polarisationsschicht (14) ist im Ausführungsbeispiel ein aus zwei Dreikantprismen (15, 16) gebildeter Würfel, wobei die Polarisationsschicht (14) zwischen den einander zugewandten Begrenzungsflächen der Dreikantprismen (15, 16) angeordnet ist.

Der dritte Polarisations-Umsetzer (10) ist beispielsweise eine doppelbrechende Platte, die zusammen mit dem Reflektor (11) eine 90°-Drehung der Polarisationsebene einer Linearpolarisation bewirkt.

Der Reflektor (11) ist als Planspiegel oder, wie im Ausführungsbeispiel dargestellt, vorzugsweise als Prisma mit mindestens zwei im Winkel von 90° zueinander stehenden Spiegelflächen, beispielsweise als Dachkantprisma oder Tripelprisma, ausgebildet.

Die Ablenkeinheit (4) weist außerdem noch zwei, sich radial gegenüberliegende Lichtaustritt-Öffnungen (17, 18) für die aus der Ablenkeinheit (4) austretenden Ausgangs-Lichtstrahlen (Fig. 1; 19 bzw. Fig. 2; 20) sowie optische Mittel zur Strahlfokussierung auf.

Im dargestellten Ausführungsbeispiel, bei dem das Linsensystem (6) einen parallelen, d. h. nicht vorfokussierten Lichtstrahl (2) erzeugt, sind zur Strahlfokussierung in den Lichtaustritts-Öffnungen (17, 18) jeweils Linsen (21, 22) angebracht. Alternativ dazu kann die Linse (21) im Strahlengang des Lichtstrahles (2) zwischen dem Linsensystem (6) und der Ablenkeinheit (4) angeordnet werden, beispielsweise stationär hinter dem steuerbaren ersten Polarisations-Umsetzer (7) oder vor dem zweiten Polarisations-Umsetzer (8) in der rotierenden Ablenkeinheit (4). Die Linse (22) kann sich zwischen Polarisations-Strahlteiler (9) und Reflektor (11) befinden. Anstelle von jeweils einer Linse kann auch eine Linsen-Kombination verwendet werden.

Wird, wie im dargestellten Ausführungsbeispiel, ein nicht vorfokussierter Lichtstrahl (2) verwendet, haben die zur Fokussierung der Ausgangs-Lichtstrahlen (19, 20) verwendeten Linsen (21, 22) gleiche optische Parameter. Wird dagegen ein durch eine entsprechende Ausbildung und Anordnung des Linsensystems (6) vorfokussierter Lichtstrahl (2) verwendet, weisen die Linsen (21, 22) unterschiedliche optische Parameter auf.

Nach der Beschreibung des Aufbaus der Lichtstrahl-Ablenkvorrichtung wird deren Wirkungsweise näher erläutert.

Der von der Lichtquelle (1) erzeugte polarisierte Lichtstrahl (2) wird von dem Linsensystem (6) kollimiert und dem steuerbaren ersten Polarisations-Umsetzer (7) zugeführt. In dem steuerbaren ersten Polarisations-Umsetzer (7) wird die Polarisation des Lichtstrahles (2) in eine Zirkularpolarisation umgesetzt und die Drehrichtung der Zirkularpolarisation in Abhängigkeit von dem jeweiligen Signalpegel des Steuersignals auf der Leitung (13) derart umgeschaltet, daß der Lichtstrahl (2) beispielsweise bei dem einen Signalpegel des Steuersignals eine rechtsdrehende Zirkularpolarisation und bei dem anderen Signalpegel eine linksdrehende Zirkularpolarisation aufweist.

Der unterschiedlich zirkular polarisierte Lichtstrahl (2) wird dann dem zweiten Polarisations-Umsetzer (8) in der rotierenden Ablenkeinheit (4) zugeführt. Der zweite Polarisations-Umsetzer (8) setzt die Zirkularpolarisation des Lichtstrahles (2) in Abhängigkeit von der jeweiligen Drehrichtung der Zirkularpolarisation in eine Linearpolarisation mit dem ersten oder zweiten Polarisationszustand um.

Der aus dem zweiten Polarisations-Umsetzer (8) austretende, linear polarisierte Lichtstrahl (2) fällt dann auf die Polarisationsschicht (14) des Polarisations-Strahlteilers (9) und wird an der Polarisationsschicht (14) entsprechend seinem ersten oder zweiten Polarisationszustand entweder reflektiert oder von der Polarisationsschicht (14) durchgelassen, so daß sich zwei unterschiedliche Lichtwege (A, B) innerhalb der Ablenkeinheit (4) ergeben.

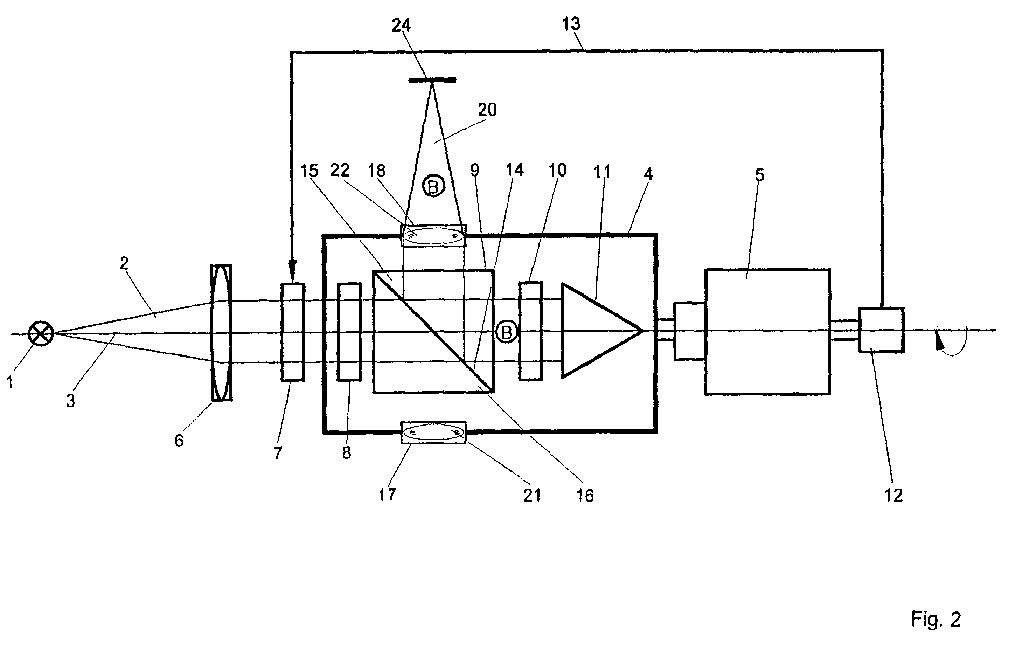

Die zwei Lichtwege (A, B) werden nachfolgend anhand der Fig. 1 und 2 näher erläutert, wobei die Fig. 1 und 2 die Lichtstrahl-Ablenkvorrichtung in derselben Drehstellung um die optische Achse (3) zeigen.

Weist der linear polarisierte Lichtstrahl (2) den ersten Polarisationszustand auf, wird der Lichtstrahl (2), wie in Fig. 1 dargestellt, an der Polarisationsschicht (14) über den Lichtweg (A) als erster Ausgangs-Lichtstrahl (19) reflektiert, von der Polarisationsschicht (14) aber nicht durchgelassen, so daß der zweite Ausgangs-Lichtstrahl (20) nicht gebildet wird.

Der erste Ausgangs-Lichtstrahl (19) tritt durch die erste Lichtaustritts-Öffnung (17) aus der Abkenkeinheit (4) aus und wird durch die Linse (21) auf eine stationäre erste Bezugsebene (23) fokussiert.

Weist der linear polarisierte Lichtstrahl (2) dagegen den zweiten Polarisationszustand auf, wird der Lichtstrahl (2), wie in Fig. 2 dargestellt, von der Polarisatinsschicht (14) über den Lichtweg (B) durchgelassen, von der Polarisationschicht (14) aber nicht reflektiert, so daß der erste Ausgangs-Lichtstrahl (19) nicht gebildet wird.

Der durchgelassene Lichtstrahl (2) wird auf den dritten Polarisations-Umsetzer (10) geleitet, der seinen Polarisationszustand verändert. Der Lichtstrahl (2) wird dann an dem Reflektor (11) reflektiert, wobei der Polarisationszustand wieder verändert wird. Der an dem Reflektor (11) reflektierte Lichtstrahl (2) durchläuft erneut den dritten Polarisations-Umsetzer (10) aber in entgegengesetzter Richtung, wodurch eine Drehung der Polarisation um 90° gegenüber der Polarisation des in Richtung des Reflektors (11) laufenden Lichtstrahles (2) erreicht wird. Dadurch wird der von dem Reflektor (11) kommende Lichtstrahl (2) an der Polarisationsschicht (14) des Polarisations-Strahlteilers (9) als zweiter Ausgangs-Lichtstrahl (20) reflektiert.

Der zweite Ausgangs-Lichtstrahl (20) tritt unter der Voraussetzung, daß die Polarisationschicht (14) des Polarisations-Strahlteilers (9) einen Neigungswinkel von 45° gegenüber der optischen Achse (3) aufweist, mit einem Versatz von 180° gegenüber dem ersten Ausgangs-Lichstrahl (19) durch die zweite Lichtaustritts-Öffnung (18) aus der Ablenkeinheit (4) aus und wird durch die Linse (22) auf eine zweite stationäre Bezugsebene (24) fokussiert.

Bei der erfindungsgemäßen Lichtstrahl-Ablenkvorrichtung lassen sich somit in vorteilhafter Weise in jeder Umdrehung der Abkenkeinheit (4) über die Dauer der Signalpegel des Steuersignals Arbeits-Bereiche festlegen, in denen jeweils einer der Ausgangs-Lichtstrahlen (19 bzw. 20) eingeschaltet und der andere Ausgangs-Lichtstrahl (20 bzw. 19) ausgeschaltet ist. Da an der Polarisationsschicht (14) des Polarisations-Strahlteilers (9) keine Strahlteilung stattfindet, hat der jeweils in dem festgelegten Arbeits-Bereich aktive Ausgangs-Lichtstrahl (19 bzw. 20) in vorteilhafter Weise nahezu die volle Lichtleistung des Lichtstrahles (2).

Die jeweilige Dauer der Signalpegel des Steuersignals läßt sich beispielsweise am Drehimpulsgeber (12) programmieren.

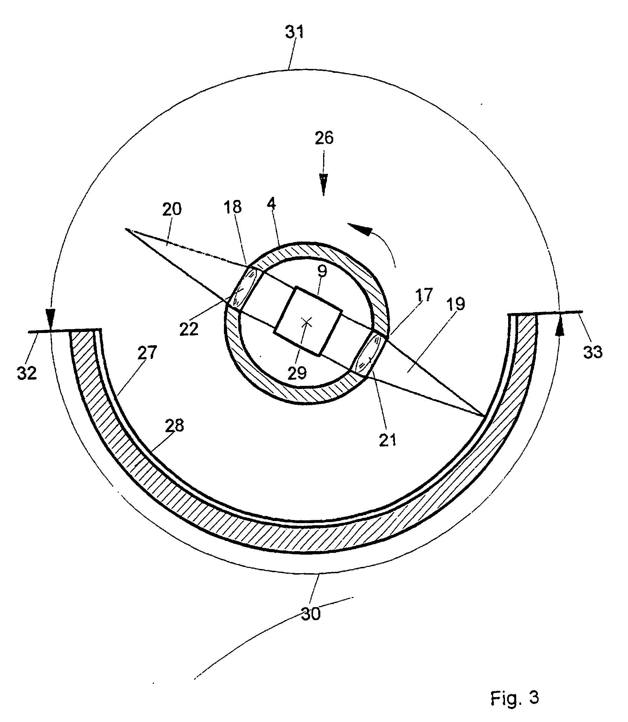

Fig. 3 zeigt ein Anwendungsbeispiel für die erfindungsgemäße Lichtstrahl-Ablenkvorrichtung in einer Abtasteinrichtung (26) eines nach dem Innentrommel-Prinzip arbeitenden Recorders (Belichters). Bei einem solchen Innentrommel-Recorder ist das Aufzeichnungsmaterial (27) an der Innenwand eines Zylindersegments als Belichtungsmulde (28) fixiert. Die Abtasteinrichtung (26) rotiert um die Längsachse (29) der Belichtungsmulde (28). Die Abtasteinrichtung (26) weist die in den Fig. 1 und 2 dargestellte Lichtstrahl-Ablenkvorrichtung auf, wobei die Innenfläche der Belichtungsmulde (28) eine der Bezugsebenen (23 bzw. 24) bildet . Die um 180° radial gegeneinander versetzten Ausgangs-Lichtstrahlen (19, 20) werden von einem Bildsignal helligkeitsmoduliert, was nicht näher dargestellt ist, und zur Belichtung punkt- und zeilenweisen über das Aufzeichnungsmaterial (27) geführt. Dabei bewegt sich die Abtasteinrichtung (26) in Richtung der Längsachse (29) mittels eines nicht gezeigten Antriebes.

Jede Umdrehung der Lichtstrahl-Ablenkvorrichtung ist in einen Arbeits-Bereich (30) und einen Rückführungs-Bereich (31) unterteilt. Im dargestellten Beispiel ist der Ausgangs-Lichtstrahl (19), während er den Arbeits-Bereich (30) überstreicht, eingeschaltet und belichtet eine Zeile auf dem Aufzeichnungsmaterial (27) von einem Zeilenanfang (32) bis zu einem Zeilenende (33). Während der Ausgangs-Lichtstrahl (19) eingeschaltet ist, ist der Ausgangs-Lichtstrahl (20) in seinem Rückführungs-Bereich (31) ausgeschaltet. Verläßt der eingeschaltete Ausgangs-Lichtstrahl (19) am Zeilenende (33) den Arbeits-Bereich (30), wird er ausgeschaltet. Zu diesem Zeitpunkt hat der rückgefühte Ausgangs-Lichtstrahl (20) den Zeilenanfang (32) der nächsen Zeile erreicht und wird zur Belichtung der entsprechenden Zeile eingeschaltet.

Der Drehimpulsgeber (12) nach Fig. 1 oder 2 ist derart programmierbar, daß in jeder Umdrehung der Ablenkeinheit (4) das zweipeglige Steuersignal für den ersten Polarisations-Umsetzer (7) während des Arbeits-Bereiches (30) den einen Signalpegel und während des Rückführungs-Bereiches (31) den anderen Signalpegel einnimmt.

Da bei der erfindungsgemäßen Lichtstrahl-Ablenkvorrichtung der im Arbeits-Bereich (30) jeweils aktive Ausgangs-Lichtstrahl (19 bzw. 20) nahezu die volle Lichtleistung des in der Lichtquelle (1) erzeugten Lichtstrahles (2) hat, wird bei der Belichtung des Aufzeichnungsmaterials (27) ein hoher optischer Wirkungsgrad erreicht. Gleichzeitig wird aber auch ein hoher Nutzungsgrad erzielt, da die Belichtung des Aufzeichnungsmaterials (27) ohne Totzeiten erfolgt. Die erfindungsgemäße Lichtstrahl-Ablenkvorrichtung vereinigt somit in bevorzugter Weise die positiven Eigenschaften einer herkömmlichen Einstrahl-Ablenkvorrichtung mit denen einer herkömmlichen Zweistrahl-Ablenkvorrichtung.

Die erfindungsgemäße Lichtstrahl-Ablenkvorrichtung kann bei Aufzeichnungsgeräten vom Innentrommel-Typ oder vom Flachbett-Typ Anwendung finden. Es liegt im Rahmen der Erfindung, die Lichtstrahl-Ablenkvorrichtung auch bei Vorlagen-Abtastgeräten einzusetzen. In diesem Falle dienen die beiden Ausgangs-Lichtstrahlen zur punkt- und zeilenweisen Beleuchtung der Vorlagen.

## Patentansprüche

1. Vorrichtung zur Ablenkung eines Lichtstrahles, bestehend aus
- einer stationären Lichtquelle (1) zur Erzeugung eines polarisierten Lichtstrahles (2) entlang einer optischen Achse (3),
- Mittel zur Zirkularpolarisation des polarisierten Lichtstrahls (2),
- einem in der optischen Achse (3) vor der Lichtquelle (1) angeordneten Objektiv (6) und
- einer von dem zirkularpolarisierten Lichtstrahl (2) beaufschlagten, um die optische Achse (3) rotierbaren Ablenkeinheit (4), enhaltend
- einen Polarisations-Strahlteiler (9), der polarisiertes Licht in Abhängigkeit von dem Polarisationszustand durchläßt oder reflektiert und
- einen auf der optischen Achse (3) hinter dem Polarisations-Strahlteiler (9) angeordneten Polarisations-Umsetzer (10) und einen Reflektor (11), welche das durchgelassene Licht bezüglich der Polarisationsrichtung in der Phase um 90° gedrehtes polarisiertes Licht transformieren, wobei das vom Reflektor (11) auf den Polarisations-Strahlteiler (9) zurückgeworfene Licht an diesem reflektiert wird, **dadurch gekennzeichnet, daß**
- vor der rotierenden Ablenkeinheit (4) ein steuerbarer stationärer erster Polarisations-Umsetzer (7) angeordnet ist, in dem die Drehrichtung der Zirkularpolarisation des Lichtstrahles (2) in Abhängigkeit von einem Steuersignal umgeschaltet wird,
- in der rotierenden Ablenkeinheit (4) vor dem Polarisations-Strahlteiler (9) ein zweiter Polarisations-Umsetzer (8) angeordnet ist, welcher die Zirkularpolarisation des Lichtstrahles (2) in Abhängigkeit von der jeweiligen Drehrichtung der Zirkularpolarisation in eine Linearpolarisation mit einem ersten Polarisationszustand oder einem zweiten Polarisationszustand umwandelt,
- der Lichtstrahl (2) mit dem ersten Polarisationszustand von dem Polarisations-Strahlteiler (9) als erster Ausgangs-Lichtstrahl (19) der Ablenkvorrichtung reflektiert wird und
- der Lichtstrahl (2) mit dem zweiten Polarisationszustand von dem Polarisations-Strahlteiler (9) durchgelassen, nach Durchlaufen des dritten Polarisations-Umsetzers (10) an dem Reflektor (11) reflektiert und nach nochmaligem Durchlaufen des dritten Polarisations-Umsetzers (10) auf den Polarisations-Strahlteiler (9) geleitet und an diesem als zweiter Ausgangs-Lichtstrahl (20) der Ablenkvorrichtung im wesentlichen senkrecht zu der optischen Achse (3) reflektiert wird.

2. Vorrichtung nach Anspruch 1, **dadurch gekennzeichnet, daß** durch das Steuersignal für den ersten Polarisations-Umsetzer (7) die Einschaltzeit eines der Ausgangs-Lichtstrahlen (19 bzw. 20) und die Ausschaltzeit des anderen Ausgangs-Lichtstrahles (20 bzw. 19) festlegbar ist.

3. Vorrichtung nach Anspruch 1 oder 2, **dadurch gekennzeichnet, daß** das Steuersignal für den ersten Polarisations-Umsetzer (7) von einem mit der rotierenden Ablenkeinheit (4) gekoppelten Drehimpulsgeber (12) gewonnen wird.

4. Vorrichtung nach Anspruch 3, **dadurch gekennzeichnet, daß** durch das Steuersignal in jeder Umdrehung der Ablenkeinheit (4) mindestens ein Arbeits-Bereich (30) festlegbar ist, in dem einer der Ausgangs-Lichtstrahlen (19 bzw. 20) eingeschaltet ist.

5. Vorrichtung nach einem der Ansprüche 1 bis 4, **dadurch gekennzeichnet, daß** der steuerbare erste Polarisations-Umsetzer (7) als elektrooptischer Modulator ausgebildet ist.

6. Vorrichtung nach einem der Ansprüche 1 bis 5, **dadurch gekennzeichnet, daß** der zweite Polarisations-Umsetzer (8) als doppeltbrechende Platte, beispielsweise als λ/4-Platte, ausgebildet ist.

7. Vorrichtung nach einem der Ansprüche 1 bis 6, **dadurch gekennzeichnet, daß** der Polarisations-Strahlteiler (9) aus zwei Dreikantprismen (15, 16) gebildet ist, zwischen denen sich ein Luftspalt erstreckt.

8. Vorrichtung nach einem der Ansprüche 1 bis 7, **dadurch gekennzeichnet, daß** der dritte Polarisations-Umsetzer (10) als doppelbrechende Platte, beispielsweise als λ/4-Platte, ausgebildet ist.

9. Vorrichtung nach einem der Ansprüche 1 bis 8, **dadurch gekennzeichnet, daß** der Reflektor (11) als Planspiegel ausgebildet ist.

10. Vorrichtung nach einem der Ansprüche 1 bis 8, **dadurch gekennzeichnet, daß** der Reflektor (11) als Prisma mit mindestens zwei Spiegelflächen ausgebildet ist.

11. Vorrichtung nach einem der Ansprüche 1 bis 10, **dadurch gekennzeichnet. daß** zur Fokussierung des ersten Ausgangs-Lichtstrahles (19) zwischen Objektiv (6) und Polarisations-Strahlteiler (9) und/oder im Strahlengang des ersten Ausgangs-Lichtstrahles (19) mindestens eine Linse (21) angeordnet ist.

12. Vorrichtung nach einem der Ansprüche 1 bis 11, **dadurch gekennzeichnet, daß** zur Fokussierung des zweiten Ausgangs-Lichtstrahles (20) zwischen dem Polarisations-Strahlteiler (9) und dem Reflektor (11) und/oder im Strahlengang des zweiten Ausgangs-Lichtstrahles (20) mindestens eine Linse (22) angeordnet ist.

## Claims

1. Device for deflecting a light beam, consisting of
- a stationary light source (1) for generating a polarised light beam (2) along an optical axis (3),
- means for circular polarisation of the polarised light beam (2),
- an objective (6), arranged in the optical axis (3) in front of the light source (1) and
- a deflecting unit (4) impacted by the circularpolarised light beam (2) and rotatable about the optical axis (3), containing
- a polarisation beam splitter (9), which transmits or reflects polarised light in dependence on the polarisation state and
- a polarisation converter (10), arranged on the optical axis (3) behind the polarisation beam splitter (9), and a reflector (11) which transform the transmitted light with respect to the polarisation direction in the phase of polarised light rotated by 90°, wherein the light reflected from the reflector (11) on to the polarisation beam splitter (9) is reflected on this, **characterised in that**
- in front of the rotating deflecting unit (4) a controllable, stationary first polarisation converter (7) is arranged, in which the direction of rotation of the circular polarisation of the light beam (2) is reversed in dependence on a control signal,
- in the rotating deflecting unit (4) in front of the polarisation beam splitter (9) a second polarisation converter (8) is arranged, which converts the circular polarisation of the light beam (2) in dependence on the respective direction of rotation of the circular polarisation into a linear polarisation with a first polarisation state or a second polarisation state,
- the light beam (2) with the first polarisation state is reflected by the polarisation beam splitter (9) as a first output light beam (19) of the deflecting device and
- the light beam (2) with the second polarisation state is transmitted by the polarisation beam splitter (9), after passing through the third polarisation converter (10) is reflected on the reflector (11) and after passing through the third polarisation converter (10) again is conducted on to the polarisation beam splitter (9) and reflected on this as a second output light beam (20) of the deflecting device substantially perpendicular to the optical axis (3).

2. Device according to claim 1, **characterised in that** the switching on time of one of the output light beams (19 or 20) and the switching off time of the other output light beam (20 or 19) can be fixed by the control signal for the first polarisation converter (7).

3. Device according to claim 1 or 2, **characterised in that** the control signal for the first polarisation converter (7) is obtained from an angular momentum generator (12) coupled to the rotating deflecting unit (4).

4. Device according to Claim 3, **characterised in that** by means of the control signal in every revolution of the deflecting unit (4) at least one working region (30) can be fixed, in which one of the output light beams (19 or 20) is switched on.

5. Device according to one of Claims 1 to 4, **characterised in that** the controllable first polarisation converter (7) is constructed as an electro-optical modulator.

6. Device according to one of Claims 1 to 5, **characterised in that** the second polarisation converter (8) is constructed as a double-refracting plate, for example as a λ/4 plate.

7. Device according to one of Claims 1 to 6, **characterised in that** the polarisation beam splitter (9) is constructed of two triangular prisms (15, 16), between which an air g p extends.

8. Device according to one of Claims 1 to 7, **characterised in that** the third polarisation converter (10) is constructed as a double-refracting plate, for example as a λ/4 plate.

9. Device according to one of claims 1 to 8, charactcrised in that the reflector (11) is constructed as a plane mirror.

10. Device according to one of Claims 1 to 8, **characterised in that** the reflector (11) is constructed as a prism with at least two mirror faces.

11. Device according to one of Claims 1 to 10, **characterised in that** for focusing the first output light beam (19) at least one lens (21) is arranged between objective (6) and polarisation beam splitter (9) and/or in the beam path of the first output light beam (19).

12. Device according to one of Claims 1 to 11, **characterised in that** for focusing the second output light be (20) (20) at least one lens (22) is arranged between the polarisation beam splitter (9) and the reflector (11) and/or in the beam path of the second output light beam (20).

## Revendications

1. Dispositif de déflection d'un rayon lumineux comprenant :
- une source lumineuse fixe (11) générant un rayon de lumière polarisée (2) suivant un axe optique (3),
- des moyens de polarisation circulaires du rayon lumineux polarisé (2),
- un objectif (6) placé suivant l'axe optique (3) devant la source lumineuse (1),
- une unité de déflexion (4), recevant le rayon lumineux de la polarisation circulaire, cette unité tournant autour de l'axe optique (3),
- un diviseur de rayon de polarisation (9) qui laisse passer ou réfléchit la lumière polarisée suivant l'état de polarisation et
- un convertisseur de polarisation (10) prévu sur l'axe optique (9) derrière le diviseur de rayon de polarisation (9) et un réflecteur (11) qui transforme la lumière polarisée ayant passé, pour tourner sa direction de polarisation en phase de 90°,
- la lumière renvoyée par le réflecteur (11) sur le diviseur de rayon à polarisation (9) étant réfléchie par celui-ci,
**caractérisé en ce que**
- devant l'unité de déflexion (4) rotative se trouve un premier convertisseur de polarisation (7), fixe, commandé, qui commute le sens de rotation de la polarisation circulaire du rayon lumineux (2) en fonction d'un signal de commande,
- dans l'unité de déflexion (4) rotative, devant le diviseur de rayon à polarisation (9), se trouve un second convertisseur de polarisation (8) qui convertir la polarisation circulaire du rayon lumineux (2) suivant le sens de rotation respectif de la polarisation circulaire en une polarisation linéaire avec un premier état de polarisation ou un second état de polarisation,
- le rayon lumineux (2) ayant un premier état de polarisation est réfléchi par le diviseur de rayon à polarisation (9) comme premier rayon lumineux de sortie (19) du déflecteur et
- le rayon lumineux (2), avec le second état de polarisation, traverse le diviseur de rayon à polarisation (9) et après passage dans le troisième convertisseur de polarisation (10) il est réfléchi par le réflecteur (11) et après avoir de nouveau passé le troisième convertisseur de polarisation (10), il arrive sur le diviseur de rayon à polarisation (9) pour être réfléchi sur celui-ci comme second rayon lumineux de sortie (20) du déflecteur, dans une direction essentiellement perpendiculaire à l'axe optique (3).

2. Dispositif selon la revendication 1,
**caractérisé en ce que**
le signal de commande du premier convertisseur à polarisation (7) fixe la durée de passage du premier rayon lumineux de sortie (19, 20) et la durée de coupure de l'autre rayon lumineux de sortie (20, 19).

3. Dispositif selon l'une quelconque des revendications 1 ou 2,
**caractérisé en ce que**
le signal de commande du premier convertisseur à polarisation (7) est fourni par un générateur à impulsions de rotation (12) couplé à l'unité de déflexion (4) rotative.

4. Dispositif selon la revendication 3,
**caractérisé en ce que**
le signal de commande fixe au moins une plage de travail (30) pour chaque rotation de l'unité de déflexion (4), plage dans laquelle l'un des rayons lumineux de sortie (19, 20) est mis en oeuvre.

5. Dispositif selon l'une quelconque des revendications 1 à 4,
**caractérisé en ce que**
le premier convertisseur de polarisation (7) commandé est un modulateur électro-optique.

6. Dispositif selon l'une quelconque des revendications 1 à 5,
**caractérisé en ce que**
le second convertisseur de polarisation (8) est une plaque à double réfraction, par exemple un plaque λ/4.

7. Dispositif selon l'une quelconque des revendications 1 à 6,
**caractérisé en ce que**
le diviseur de rayon à polarisation (9) est formé de deux prismes à trois arêtes (15, 16) entre lesquelles il y a un intervalle d'air.

8. Dispositif selon l'une quelconque des revendications 1 à 7,
**caractérisé en ce que**
le troisième convertisseur de polarisation (10) est une plaque à double réfraction, par exemple une plaque λ/4.

9. Dispositif selon l'une quelconque des revendications 1 à 8,
**caractérisé en ce que**
le réflecteur (11) est un miroir plan.

10. Dispositif selon l'une quelconque des revendications 1 à 8,
**caractérisé en ce que**
le réflecteur (11) est réalisé sous la forme d'un prisme avec au moins deux surfaces de miroirs.

11. Dispositif selon l'une quelconque des revendications 1 à 10,
**caractérisé par**
au moins une lentille (11) pour focaliser le premier rayon lumineux de sortie (19), entre l'objectif (6) et le diviseur de rayon à polarisation (9) et/ou dans le chemin du premier rayon lumineux de sortie (19).

12. Dispositif selon l'une quelconque des revendications 1 à 11,
**caractérisé par**
au moins une lentille (22) pour focaliser le second rayon lumineux de sortie (20) entre le diviseur de faisceau à polarisation (9) et le réflecteur (11) et/ou le chemin du second rayon lumineux de sortie (20).
